# EUROPÄISCHE PATENTANMELDUNG

(11) **EP 0 816 034 A1**
(43) Veröffentlichungstag der Anmeldung: **07.01.1998**
(21) Anmeldenummer: 97810295.2
(22) Anmeldetag: 12.05.1997
(51) Int. Cl.: B29B 7/84, B29B 7/86, B01D 19/00, B01F 7/16, B01F 15/06

(54) **Vorrichtung zum Mischen und Entgasen einer fliessfähigen Masse**

(30) Priorität: 25.06.1996 DE 19625208
(71) Anmelder: MICAFIL Vakuumtechnik AG, CH-8048 Zürich (CH)
(72) Erfinder: Gmeiner, Paul, 8966 Lieli (CH)
(74) Vertreter: Kaiser, Helmut, Dr.

(57) **Zusammenfassung**

Die Vorrichtung dient dem Mischen und Entgasen einer fliessfähigen Masse (5), insbesondere eines füllstoffenthaltenden Giessharzes. Sie weist einen zylinderförmig ausgebildeten, evakuierbaren Behälter (1, 6) auf, dessen Behälterachse (2) im wesentlichen in horizontaler Richtung ausgerichtet ist. Im Behälterinneren ist ein an einer axial geführten Welle (12) befestigter drehbarer Teller (13) zum Verteilen von in den Behälter (1, 6) geführter Masse (5) vorgesehen sowie ein die vom Verteilteller (13) zugeführte Masse (5) entgasendes heiz- und kühlbares Dünnschicht-Entgasungssystem (14). Ein Rührer homogenisiert die im Behälterinneren gesammelte entgaste Masse. Das Dünnschicht-Entgasungssystem (14) nimmt den überwiegenden Teil des zwischen der Welle (12) und der Wand des Behälters (1, 6) vorhandenen Raums ein. Der Rührer weist am Verteilteller (13) befestigte und in den Bodenbereich des Behälters (1, 6) geführte Rührarme (19, 20) auf, welche das Dünnschicht-Entgasungssystem (14) an der vom Verteilteller (13) abgewandten Seite hintergreifen.

Eine solche Vorrichtung zeichnet sich durch einen hohen Massendurchsatz aus und kann bei geeigneter Niveauregelung im Durchlauf betrieben werden.

## Beschreibung

### TECHNISCHES GEBIET

Bei der Erfindung wird ausgegangen von einer Vorrichtung zum Mischen und Entgasen einer fliessfähigen Masse nach dem Oberbegriff von Patentanspruch 1.

Eine solche Vorrichtung dient dem Aufbereiten einer giessfähigen Masse unmittelbar bevor die Masse in einer Giessapparatur in Formen abgegossen wird. In dieser Vorrichtung wird die Masse wirkungsvoll entgast und durchmischt. Unerwünschte Gaseinschlüsse in der zu vergiessenden Masse und ein Entmischen der Masse, beispielsweise eine Sedimentation in einem füllstoffenthaltenden Giessharz, werden so vermieden.

### STAND DER TECHNIK

Eine Misch- und Entgasungsvorrichtung der eingangs genannten Art ist in CH-A5 655 857 beschrieben. Diese Vorrichtung weist einen zylinderförmig ausgebildeten, evakuierbaren Behälter auf, dessen Behälterachse im wesentlichen in horizontaler Richtung ausgerichtet ist. Im Behälter angeordnet ist ein an einer axial geführten Welle befestigter drehbarer Teller, welcher in den Behälter geführte Masse auf ein überwiegend im Bereich der Mantelfläche des Behälters angeordnetes heiz- und kühlbares Dünnschicht-Entgasungssystem leitet. Von diesem System entgaste Masse wird mit Hilfe eines an der Welle befestigten flügelförmig ausgebildeten Rührelementes durchmischt. Da die Entgasung der Masse lediglich auf dem Teller und im Aussenbereich des Behälters stattfindet, benötigt die Vorrichtung für das Aufbereiten der Masse einen relativ grossen Zeitraum.

### KURZE DARSTELLUNG DER ERFINDUNG

Der Erfindung, wie sie in den Patentansprüchen definiert ist, liegt die Aufgabe zugrunde, eine Vorrichtung der eingangs genannten Art anzugeben, welche sich durch einen hohen Massendurchsatz auszeichnet und welche über grosse Zeiträume hinweg praktisch wartungsfrei betrieben werden kann.

Bei der Misch- und Entgasungsvorrichtung nach der Erfindung nimmt das Dünnschicht-Entgasungssystem den überwiegenden Teil des Behälterinneren ein. Daher kann der Massendurchsatz ganz wesentlich gesteigert werden, ohne dass zusätzliche Massnahmen zur Wartung der Vorrichtung erforderlich sind.

Durch Unterteilung des Dünnschicht-Entgasungssystems in horizontal verteilte Stufen kann der Wirkungsgrad der Vorrichtung weiter gesteigert werden. Zugleich kann dann durch die Vorrichtung laufende Masse kontinuierlich erwärmt oder gegebenenfalls kontinuierlich gekühlt werden.

Ist durch eine geeignete Niveauregelung gewährleistet, dass im Behälter eine Minimalmenge an entgaster und durchmischter Masse verbleibt, so kann die Vorrichtung nach der Erfindung kontinuierlich im Durchlauf betrieben werden.

Da durch einen bevorzugt am Behälterboden wirkenden Rührer eine Entmischung durch Ablagerung fester Partikel vermieden wird, eignet sich die Misch- und Entgasungsvorrichtung nach der Erfindung in besonders vorteilhafter Weise zur Aufbereitung von fliessfähigen, einen Füllstoff enthaltenden Giessharzmassen.

### KURZE BESCHREIBUNG DER ZEICHNUNGEN

Diese und weitere Vorteile der Erfindung werden nachfolgend anhand von Zeichnungen näher erläutert. Hierbei zeigt:
- Fig.1: eine Aufsicht auf einen axial geführten Schnitt durch einen zylinderförmig ausgebildeten Behälter einer ersten Ausführungsform der Misch- und Entgasungsvorrichtung nach der Erfindung, bei der ein im Behälter vorgesehenes Dünnschicht-Entgasungssystem schematisch dargestellt ist, und bei der der Behälter eine im wesentlichen quer zur Behälterachse geführte Trennwand aufweist, welche den Behälter in einen Lagerbehälter für zu entgasende Masse und einen Behälter zum Entgasen und Mischen dieser Masse unterteilt,
- Fig.2: in vergrösserter Darstellung eine Aufsicht auf einen axial geführten Schnitt durch einen Teil eines als Spiralen ausgeführten Dünnschicht-Entgasungssystems der Vorrichtung gemäss Fig.1, und
- Fig.3: eine Aufsicht auf einen axial geführten Schnitt durch einen zylinderförmig ausgebildeten Behälter einer gegenüber der ersten geringfügig abgewandelten zweiten Ausführungsform der Misch- und Entgasungsvorrichtung nach der Erfindung.

### WEG ZUR AUSFÜHRUNG DER ERFINDUNG

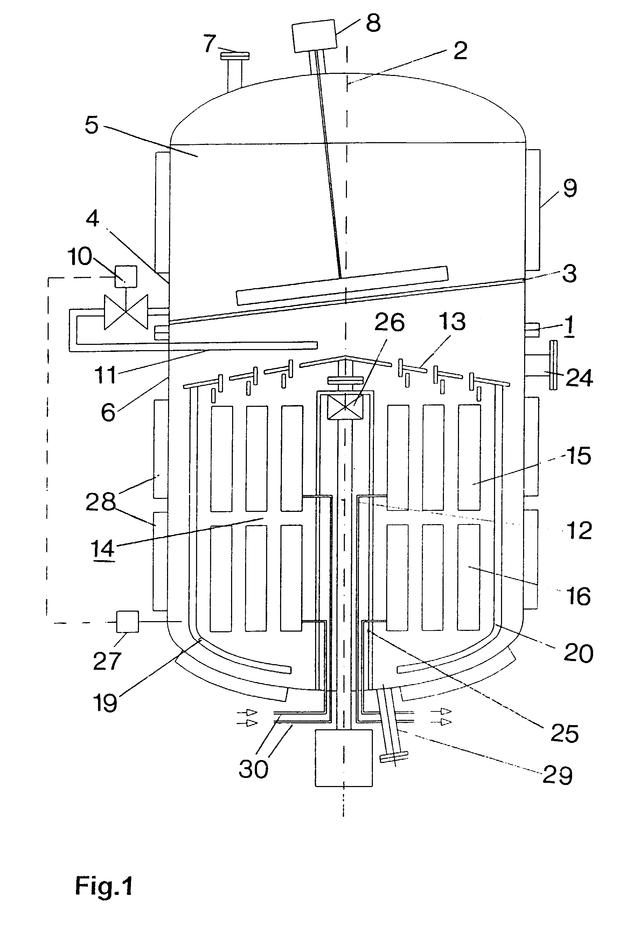

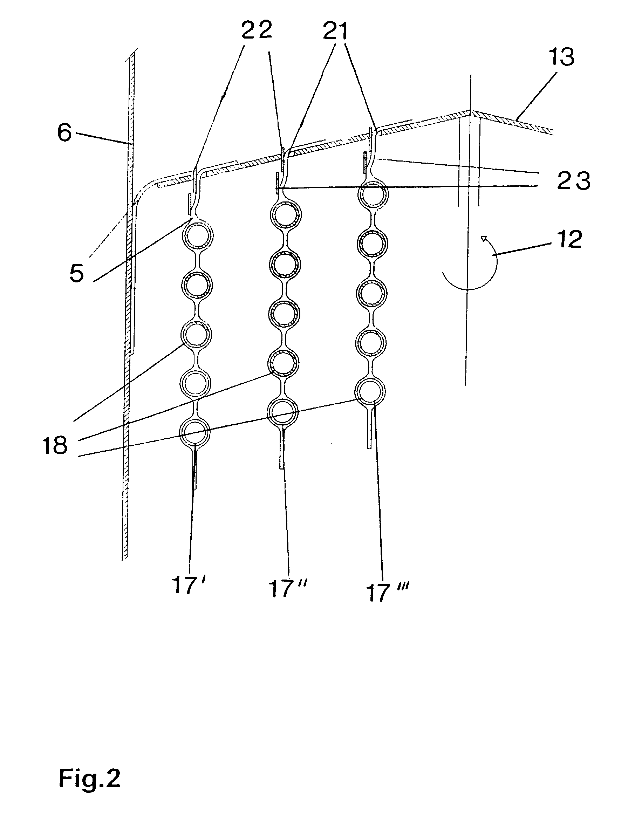

In allen Figuren bezeichnen gleiche Bezugszeichen auch gleichwirkende Teile. Die in den Figuren 1 und 2 dargestellte Misch- und Entgasungsvorrichtung weist einen zylinderförmig ausgebildeten, evakuierbaren Behälter 1 auf, dessen Behälterachse 2 im wesentlichen in horizontaler Richtung ausgerichtet ist. Dieser Behälter ist durch eine im wesentlichen quer zur Behälterachse geführte und geringfügig gegenüber der Horizontalen geneigte Trennwand 3 unterteilt in einen Lagerbehälter 4 für zu entgasende, fliessfähige Masse 5, wie etwa eine Mischung zweier füllstoff freier oder füllstoffent-haltender Flüssigkeiten, beispielsweise eine reaktive füllstoffenthaltende Giessharzmasse, und einen Durchlaufbehälter 6 zur Aufbereitung dieser Masse durch Entgasen und Mischen. Die Masse kann über einen Einlass 7 in den Lagerbehälter 4 eingebracht werden. Mit Hilfe eines Rührers 8 kann die in den Lagerbehälter 4 eingebrachte Masse gemischt und mit Hilfe einer den Lagerbehälter 3 mantelförmig umgebenden Heiz- und Kühlvorrichtung 9 erwärmt oder gekühlt werden.

Der Lagerbehälter 4 ist über dem Durchlaufbehälter 6 angeordnet. Die Trennwand 3 bildet daher den Boden des Lagerbehälters 4. Am tiefsten Teil des Lagerbehälters 4 ist ein nicht bezeichneter Auslass vorgesehen, welcher über ein steuerbares Ventil 10 mit einem rohrförmig ausgebildeten Einlass 11 des Durchlaufbehälters 6 verbindbar ist. Der Einlass 11 ist in radialer Richtung mit leichtem Gefälle bis nahe an die Behälterachse 2 herangeführt.

Unter dem Einlass 11 ist ein an einem freien Ende einer axial geführten Welle 12 befestigter drehbarer Teller 13 angeordnet. Dieser Teller 13 ist ist im wesentlichen kegelförmig ausgebildet. Die Spitze des Kegels befindet sich am freien Ende der Welle 12, während der die Oberfläche des Tellers 13 bildende Kegelmantel sich mit geringem Gefälle bis nahe an die innere Wand des Durchlaufbehälters 6 hin erstreckt. Der Teller 13 dient dem Verteilen der über den Einlass 11 in den Durchlaufbehälter 6 geführten Masse.

Unterhalb des Verteiltellers 13 ist ein im Durchlaufbehälter 6 feststehend installiertes heiz- und kühlbares Dünnschicht-Entgasungssystem 14 angeordnet. Dieses Dünnschicht-Entgasungssystem 14 weist zwei horizontal übereinander angeordnete Stufen 15, 16, von denen die unter dem Verteilteller angeordnete obere Stufe 15 heizbar und die unter der oberen Stufe 15 angeordnete untere Stufe 16 heiz- und kühlbar ausgebildet ist. Die Stufen 15 bzw. 16 können jeweils in axialer Richtung ausgerichtete und jeweils als Säule ausgebildete Heiz- bzw. Heiz- und Kühlelemente mit oberflächenvergrössernden, beispielsweise von einer Keramik gebildeten, Elementen enthalten. Wie aus Fig.2 ersichtlich ist, können sie aber auch in koaxialer Anordnung zwei, drei oder noch mehr Heiz- bzw. Heiz- und Kühlspiralen 17', 17'', 17''' mit in axialer Richtung voneinander beabstandeten Rohrwindungen 18 aufweisen. Das Dünnschicht-Entgasungssystem 14 nimmt so den überwiegenden Teil des zwischen der Welle 12 und der Wand des Durchlaufbehälters 6 vorhandenen Raums ein.

Am Rand des Verteiltellers 13 sind zwei zwischen dem Dünnschicht-Entgasungssystem 14 und der Innenwand des Durchlaufbehälters 6 geführte Rührarme 19, 20 befestigt, welche in den Bodenbereich des Durchlaufbehälters 5 geführt sind und das Dünnschicht-Entgasungssystem 14 an der vom Verteilteller 13 abgewandten Seite hintergreifen. Anstelle der beiden Rührarme 19, 20 kann lediglich ein einziger Rührarm vorgesehen sein. Gegebenenfalls können aber auch drei und mehr vorzugsweise gleichmässig in Umfangsrichtung verteilt angeordnete Rührarme vorgesehen sein.

Wie insbesondere aus Fig.2 ersichtlich ist weist der Verteilteller 13 überwiegend in Umfangsrichtung geführte Schlitze 21 auf, welche an der von der Welle abgewandten Seite jeweils von einem die Oberfläche des Verteiltellers 13 überragenden Kragen 22 begrenzt sind. Unterhalb jedes Kragens 22 befindet sich ein an die Heiz- bzw. Heiz- und Kühlspiralen 17', 17'', 17''' geführtes Leitblech 23.

Oberhalb des Verteiltellers 13 mündet ein Vakuumanschluss 24 in den Durchlaufbehälter 6. An der Unterseite des Durchlaufbehälters 6 ist ein axialsymmetrisch in den Behälter geführter Stutzen 25 angebracht ist, dessen in den Behälter geführtes oberes Ende eine vakuumfeste Durchführung 26 für die Welle 12 trägt. Im unteren Teil des Durchlaufbehälters 6 ist ein das Niveau der entgasten Masse erfassender Sensor 27 angeordnet ist, welcher auf das steuerbare Ventil 10 wirkt.

Mit dem Bezugszeichen 28 sind dem Aufheizen und Kühlen des Durchlaufbehälters 6 dienende Heiz- und Kühlelemente bezeichnet. Am Boden des Durchlaufbehälters 6 sind ein Auslass 29 für entgaste und durchmischte Masse angeordnet sowie über den Stutzen 25 an die Elemente des Dünnschicht-Entgasungssystems 14 geführte Heiz- und Kühlmittelanschlüsse 30.

Die Wirkungsweise dieser Misch- und Entgasungsvorrichtung ist wie folgt:
Im Lagerbehälter 4 gespeicherte und gegebenenfalls gekühlte Masse 5 wird mittels der Heiz- und Kühlvorrichtung 9 auf eine Temperatur erwärmt, bei der sie eine relativ geringe Zähigkeit aufweist und gut fliessfähig ist. Der Rührer 8 homogenisiert hierbei die Masse 5.

Die homogenisierte Masse 5 wird über das geöffnete Ventil 10 und den Einlass 11 in den über den Vakuumanschluss 24 mit einer Vakuumquelle verbundenen Durchlaufbehälter 6 geführt. Aus dem Einlass 11 tretende Masse 5 trifft im Bereich der Spitze auf den Verteilteller 13. Die Temperatur der Masse und entsprechend auch des Inneren des Durchlaufbehälters 6 sind derart eingestellt, dass die Masse 5 in Form dünner Schichten über die Oberfläche des Verteiltellers 13 von innen nach aussen fliesst. Die Welle 12 dreht hierbei den Verteilteller 13. Daher wird - wie aus Fig.2 ersichtlich ist - die Masse über die gesamte Oberfläche des Tellers 13 verteilt. Da die Kragen 22 Leitfunktion ausüben, strömt der überwiegende Teil der Masse 5 durch die Schlitze 21 und wird mit Hilfe der Leitbleche 23 von oben an die Heizspiralen 17' 17'', 17''' der oberen Stufe 15 des Dünnschicht-Entgasungssystems 14 geführt. Die Masse 5 umströmt die oberste Rohrwindungen 18 von oben nach unten in Form einer dünnen Schicht und fliesst danach zur darunterliegenden Rohrwindung. Der verbleibende kleinere Teil der Masse 5 strömt über den Rand des Verteiltellers 13 an die Innenwand des Durchlaufbehälters 6 und fliesst dort in Form einer dünnen Schicht nach unten.

Die Heizspiralen 17', 17'', 17''' und die Innenwand des Durchlaufbehälters 5 werden auf einer Temperatur gehalten, die gerade ausreicht, um ein Fliessen in einer dünnen Schicht zu gewährleisten. Während des Fliessens in dünnen Schichten wird die Masse 5 wirkungsvoll entgast. Die entgaste Masse kann an den Heiz- und Kühlspiralen der unteren Stufe 16 noch weiter entgast werden.

Die entgaste Masse wird im unteren Teil des Durchlaufbehälters 6 gesammelt, mit den Rührarmen 19, 20 vor allem im Bodenbereich des Durchlaufbehälters 5 homogenisiert und danach bei Bedarf über den Auslass 29 zu einer Giessapparatur geführt. Die Heiz- und Kühlspiralen der unteren Stufe 16 des Dünnschicht-Entgasungssystems 14 können bei Bedarf gekühlt werden, um so durch Abkühlen die Standzeit der Masse 5 zu verlängern. Da praktisch der gesamte Innenraum des Durchlaufbehälters 6 mit Elementen des Dünnschicht-Entgasungssystems 14 ausgefüllt ist, kann in einer kurzen Zeitspanne eine grosse Massenmenge entgast werden.

Der Sensor 27 sorgt dafür, dass sich das Niveau der im Durchlaufbehälter 6 gesammelten entgasten Masse bei Betrieb der Misch- und Entgasungsvorrichtung innerhalb eines vorgegebenen Niveau-Intervalls bewegt. Abweichungen von diesem Intervall werden durch Regeln der in den Durchlaufbehälter 6 geführten Menge an Masse 5 mit Hilfe des steuerbaren Ventils 10 ausgeglichen. Die Misch- und Entgasungsvorrichtung kann daher kontinuierlich im Durchlauf betrieben werden.

Der die Welle 12 führende Stutzen 25 ist soweit ins Innere des Durchlaufbehälters 6 geführt, dass sein die vakuumdichte Durchführung 26 der Welle 12 tragendes Ende stets oberhalb des Niveaus der entgasten Masse liegt. Hierdurch ist sichergestellt, dass die vakuumdichte Durchführung 26 nicht mit der im allgemeinen chemisch aggressiven Masse in Kontakt kommt.

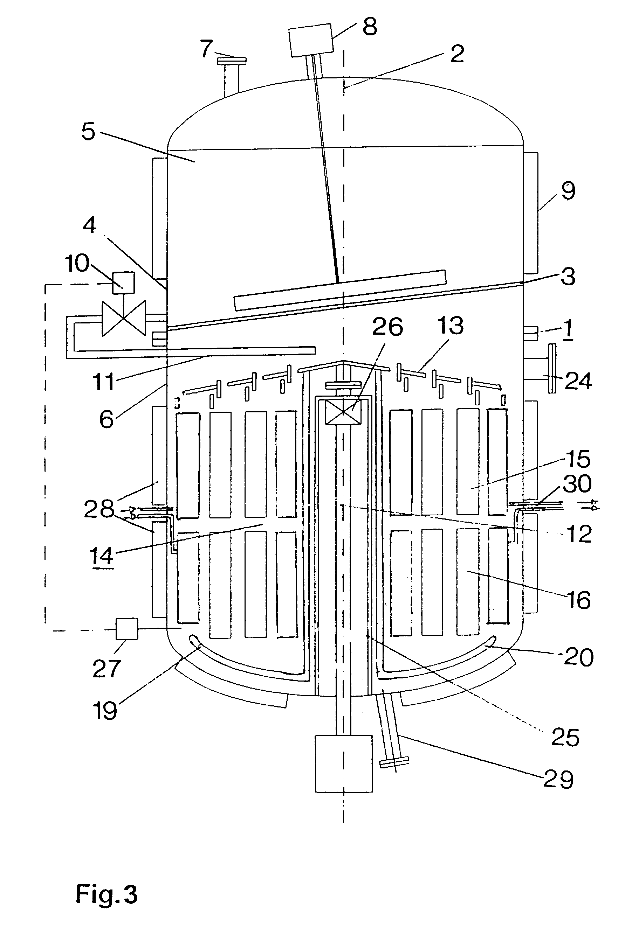

Die Rührarme 19, 20 müssen nicht unbedingt am Rand des Verteiltellers 13 angebracht und zwischen dem Dünnschicht-Entgasungssystem 14 und der Behälterwand geführt sein. Wie aus der Ausführungsform gemäss Fig.3 ersichtlich ist, können die Rührarme 19, 20 auch im zentralen Bereich des Verteiltellers 13 befestigt und zwischen der Welle 12 bzw. dem Stutzen 25 und dem Dünnschicht-Entgasungssystem 14 geführt sein. Wichtig ist vor allem, dass die Rührarme 19, 20 bis in den Bodenbereich geführt sind und das Dünnschicht-Entgasungssystem 14 hintergreifen, da dann zum einen das Dünnschicht-Entgasungssystem den grössten Teil des Raums zwischen Welle 12 bzw. Stutzen 25 und Behälterwand einnehmen kann, und da dann zum anderen eine Sedimentation der fliessfähigen Masse mit grosser Sicherheit vermieden wird. Da bei der Ausführungsform gemäss Fig.3 die Rührarme 19, 20 nahe der Welle 12 am Verteilteller 13 befestigt sind, wirken beim Betrieb der Misch- und Entgasungsvorrichtung gemäss Fig.3 geringere mechanische Kräfte auf den Verteilteller 13 als bei der Vorrichtung gemäss Fig.1.

Bei der Ausführungsform gemäss Fig.3 wird das Dünnschicht-Entgasungssystem 14 mit Vorteil von aussen über die Heiz- und Kühlmittelanschlüsse 30 geheizt bzw. gekühlt. Alternativ ist es auch möglich, die Rührarme 19, 20 etwa auf halbem Weg zwischen dem Zentrum und dem Rand am Verteilteller 13 zu befestigen. Die Rührarme 19, 20 werden in diesem Fall zwischen radial voneinander beabstandeten Heizelementen zum Bodenbereich des Durchlaufbehälters 5 geführt. Das Hintergreifen des Dünnschicht-Entgasungssystems 14 wird durch Ausbildung der Rührarme 19, 20 als Anker erreicht. Die Heiz- und Kühlmittelanschlüsse 30 führen dann entsprechend der Ausführungsform gemäss Fig.1 - von innen und - entsprechend der Ausführungsform gemäss Fig.3 - auch von aussen Heiz- oder Kühlmittel zu.

### BEZUGSZEICHENLISTE

- 1: Behälter
- 2: Behälterachse
- 3: Trennwand
- 4: Lagerbehälter
- 5: Masse
- 6: Durchlaufbehälter
- 7: Einlass
- 8: Rührer
- 9: Heiz- und Kühlvorrichtung
- 10: steuerbares Ventil
- 11: Einlass
- 12: Welle
- 13: Verteilteller
- 14: Dünnschicht-Entgasungssystem
- 15, 16: Stufen
- 17: Heiz- oder Heiz- und Kühlspiralen
- 18: Rohrwindungen
- 19, 20: Rührarme
- 21: Schlitze
- 22: Kragen
- 23: Leitbleche
- 24: Vakuumanschluss
- 25: Stutzen
- 26: vakuumdichte Durchführung
- 27: Sensor
- 28: Heiz- und Kühlelemente
- 29: Auslass
- 30: Heiz- und Kühlmittelanschlüsse

## Patentansprüche

1. Vorrichtung zum Mischen und Entgasen einer fliessfähigen Masse (5), insbesondere eines füllstoffenthaltenden Giessharzes, mit einem zylinderförmig ausgebildeten, evakuierbaren Behälter (1, 6), dessen Behälterachse (2) im wesentlichen in horizontaler Richtung ausgerichtet ist, einem in den Behälter (1, 6) geführten Einlass (11) für die Masse, einem an einer axial geführten Welle (12) befestigten drehbaren Teller (13) zum Verteilen der in den Behälter (1, 6) geführten Masse (5), einem die vom Verteilteller (13) zugeführte Masse (5) entgasenden heiz- und kühlbaren Dünnschicht-Entgasungssystem (14), einem in der entgasten Masse drehbaren Rührelement, und einem aus dem Behälter (1, 6) führenden Auslass (29) für die entgaste und durchmischte Masse, dadurch gekennzeichnet, dass das Dünnschicht-Entgasungssystem (14) den überwiegenden Teil des zwischen der Welle (12) und der Wand des Behälters (1, 6) vorhandenen Raums einnimmt, und dass das Rührelement am Verteilteller (13) befestigt ist und mindestens einen in den Bodenbereich des Behälters (1, 6) geführten Rührarm (19, 20) aufweist, welcher das Dünnschicht-Entgasungssystem (14) an der vom Verteilteller (13) abgewandten Seite hintergreift.

2. Vorrichtung nach Anspruch 1, dadurch gekennzeichnet, dass der mindestens eine Rührarm (19, 20) am Rand des Verteiltellers (13) angebracht und zwischen dem Dünnschicht-Entgasungssystem (14) und der Behälterwand geführt ist.

3. Vorrichtung nach Anspruch 1, dadurch gekennzeichnet, dass der mindestens eine Rührarm (19, 20) im zentralen Bereich des Verteiltellers (13) angebracht und zwischen der Welle (12) und dem Dünnschicht-Entgasungssystem (14) geführt ist.

4. Vorrichtung nach einem der Ansprüche 1 bis 3, dadurch gekennzeichnet, dass der Verteilteller (13) überwiegend in Umfangsrichtung geführte Schlitze (21) aufweist.

5. Vorrichtung nach Anspruch 4, dadurch gekennzeichnet, dass mindestens einer der Schlitze (21) an der von der Welle (12) abgewandten Seite von einem die Oberfläche des Verteiltellers (13) überragenden Kragen (22) begrenzt ist.

6. Vorrichtung nach einem der Ansprüche 1 bis 5, dadurch gekennzeichnet, dass das Dünnschicht-Entgasungssystem (14) mindestens zwei Stufen (15, 16) aufweist, von denen eine unter dem Verteilteller (13) angeordnete obere Stufe (15) heizbar und eine unter der oberen Stufe (15) angeordnete untere Stufe (16) heiz- und kühlbar ausgebildet ist.

7. Vorrichtung nach Anspruch 6, dadurch gekennzeichnet, dass mindestens eine der Stufen (15, 16) in axialer Richtung ausgerichtete und jeweils als Säule ausgebildete Heiz- oder Heiz- und Kühlelemente aufweist.

8. Vorrichtung nach Anspruch 6, dadurch gekennzeichnet, dass mindestens eine der Stufen (15, 16) in koaxialer Anordnung mindestens zwei Heiz- oder Heiz- und Kühlspiralen (17', 17'', 17''') aufweist mit in axialer Richtung voneinander beabstandeten Rohrwindungen (18).

9. Vorrichtung nach einem der Ansprüche 1 bis 8, dadurch gekennzeichnet, dass an der Behälterunterseite ein axialsymmetrisch in den Behälter (1, 6) geführter Stutzen (25) angebracht ist, dessen in den Behälter (1, 6) geführtes oberes Ende eine vakuumfeste Durchführung (26) für die Welle (12) trägt.

10. Vorrichtung nach einem der Ansprüche 1 bis 9, dadurch gekennzeichnet, dass im unteren Teil des Behälters (1, 6) ein das Niveau der entgasten Masse erfassender Sensor (27) angeordnet ist, welcher auf ein den Einlass (11) regelndes Ventil (10) wirkt.

11. Vorrichtung nach einem der Ansprüche 1 bis 10, dadurch gekennzeichnet, dass der Behälter (1, 6) oberhalb des Einlasses (11) eine im wesentlichen quer zur Behälterachse (2) geführte Trennwand (3) aufweist, welche den Boden eines Lagerbehälters (4) für die zu entgasende Masse (5) bildet.
